# EUROPÄISCHE PATENTSCHRIFT

(11) **EP 0 690 245 B1**
(45) Veröffentlichungstag und Bekanntmachung des Hinweises auf die Patenterteilung: **23.09.1998**
(21) Anmeldenummer: 95109702.1
(22) Anmeldetag: 22.06.1995
(51) Int. Cl.: F16G 3/00

(54) **Endbefestigungsteil eines endlichen Zahnriemens**
Termination fastening device for an endless drive belt
Dispositif de fixation d'extrémité d'une courroie crantée sans fin

(30) Priorität: 28.06.1994 DE 4422549
(43) Veröffentlichungstag der Anmeldung: 03.01.1996
(73) Patentinhaber: Continental Aktiengesellschaft, 30165 Hannover (DE)
(72) Erfinder: Göser, Hubert, D-29451 Dannenberg (DE); Harbecke, Detlef, D-29571 Rosche (DE); Wille, Helmut, D-73773 Aichwald 2 (DE)

(56) Entgegenhaltungen:
- WO-A-93/17256
- DE-U- 9 411 333
- GB-A- J12 598
- US-A- 5 010 688
- US-A- 5 106 345

## Beschreibung

Die Erfindung betrifft einen endlichen Zahnriemen mit mindestens einem Endbefestigungsteil zur Verbindung eines Zahnriemenendes mit einem Gehäuseteil oder einem anzutreibenden Bauteil, bei dem das Endbefestigungsteil aus einem geformten Streifen aus Metall oder Kunststoff besteht, der in die Verzahnung des Zahnriemens eingreifende Elemente oder Abschnitte aufweist, die in der Verzahnung sicherbar sind, und an seinem im montierten Zustand dem Zahnriemenende abgewandten Ende eine mechanische Anschlußmöglichkeit, insbesondere eine Öse, aufweist, wobei der Streifen um 180° gebogen ist, sodaß zwei das Zahnriemenende zwischen sich einschließende Schenkel gebildet sind.

Endliche Zahnriemen werden zum Antrieb von beispielsweise Toren, Hubvorrichtungen, Portalen, Linearachsen eingesetzt. Besonders geeignet sind diese endlichen Zahnriemen zur Erzielung von linearen Bewegungen.

Die endlichen Zahnriemen laufen über Zahnräder und werden beispielsweise mit ihren Enden an einem linear zu verschiebenden Bauteil befestigt. Diese Endbefestigung wurde bisher durch Verschrauben von profilierten Platten mit einer Andrückplatte vorgenommen. Die profilierten Spannplatten müssen mit dem entsprechenden Zahnprofil versehen sein. Auf der unprofilierten Oberfläche des Zahnriemenendes liegt eine Andrückplatte. Spannplatte und Andrückplatte werden über Spannschrauben gegeneinander festgezogen, so daß das Zahnriemenende formschlüssig eingespannt ist.

Aus der US-PS 51 06 345 ist ein Endbefestigungsteil für einen endlichen Zahnriemen bekannt, das aus einem Streifen aus Metall besteht, der Aussparungen zur Aufnahme der Zähne des Zahnriemenendes aufweist. Von den Rändern des Streifens stehen umbiegbare Laschen hervor, die im Befestigungszustand um die nicht profilierte Oberseite des Zahnriemens zum Fixieren des Zahnriemenendes umgebogen sind. Die übertragbaren Zugkräfte sind insbesondere für schwere Torantriebe nicht immer ausreichend.

Aus der WO 93/17 256 ist ein Endbefestigungsteil für ein Zahnriemenende bekannt, das einen kurzen Erfassungsbereich für das Zahnriemenende aufweist. Der Erfassungsbereich besteht aus lediglich einem querliegenden trapezartigen Vorsprung am oberen Schenkel, der in den ersten Zahngrund des Zahnriemenprofils eingreift. Der Zahnriemen liegt mit seiner glatten Unterseite auf einer Anschlagfläche des unteren Schenkels. Beide Schenkel sind über aufwendige und komplizierte Mechaniken außerhalb des Bereichs des Zahnriemenendes miteinander im montierten Zustand verriegelt. Diese Ausbildung kann keine hohen Kräfte übertragen, da nur in eine Zahnnut eingegriffen wird. Außerdem bedarf diese Ausbildung einer breiten Bauform, da die Arretierung der Schenkel gegeneinander in dem Bauteil untergebracht werden muß. Die Anbindung dieses Endbefestigungsteils für den Zahnriemen ist auf seiner bogenförmigen Seite über eine formschlüssige Arretierungseinrichtung realisiert und somit nur in Verbindung mit einem weiteren anderen Zahnriemen einsetzbar. Ein Anschluß über ein Kettenschloß oder ein Anschluß an ein beliebiges Gerätebauteil, z.B. einen Mitnehmerschlitten, ist direkt an diesem Endbefestigungsteil nicht möglich. Das offenbarte Endbefestigungsteil ist aufgrund seiner komplizierten Aufbauweise mit vielen Hinterschneidungen nicht einfach aus einem Blechstreifen herstellbar.

Der Erfindung liegt die Aufgabe zugrunde, einen endlichen Zahnriemen mit einem Endbefestigungsteil zu schaffen, durch das höhere Belastungen des Antriebs sicher übertragen werden können.

Die Aufgabe wird erfindungsgemäß durch die im Anspruch 1 offenbarten Merkmale gelöst.

Das jeweilige Zahnriemenende wird von den Schenkeln des Endbefestigungsteils umfaßt. Über die Anschlußmöglichkeit mit der Öse, ist eine sehr schnelle Ankopplung an das jeweilige Bauteil oder Verbindungsteil möglich. Das Eingreifen des entsprechend profilierten Schenkels in die Zahnprofilierung und die Sicherung im Zahngrund ergibt eine sichere formschlüssige Befestigung des Endbefestigungsteils und eine ausreichende Zugkraftübertragung.

Das Endbefestigungsteil aus dem geformten Streifen, insbesondere Blechstreifen kann gleich bei der Produktion des endlichen Zahnriemens angebracht werden. Dadurch wird eine einfache Montage beim Endverbraucher möglich, der lediglich die Verbindung mit dem Antrieb, einem Maschinengehäuse oder einem anderen Riemenende vornehmen muß.

Der um 180° gebogene Streifen stellt eine das Zahnriemenende umfassende Klammer dar, dessen beide Schenkel von oben und unten auf das Zahnriemenende gelegt werden. Die Spannhaken schnappen dabei in den profilierten Schenkelabschnitt ein und sichern diesen im Zahngrund. Der außenliegende Bogen des Streifens bildet eine Öse und ergibt für die Endmontage eine einfache Verbindungsmöglichkeit im jeweiligen Einsatzfall. Die Zugbelastung wird über die Flanken des Zahnprofils abgetragen.

In vorteilhafter Ausführung der Erfindung weist der nicht profilierte Schenkel längsverlaufende Ränder in der Breite des Zahnriemenendes auf, von denen entsprechend der Zahnteilung des Zahnriemens umbiegbare Spannhaken hervorstehen. Der glatte Rücken des Zahnriemens kommt zwischen den Rändern zentriert zum Liegen, wenn die Spannhaken in den Profilgrund des anderen Schenkels umgebogen werden.

Durch die Erfindung wird der endliche Zahnriemen mit einem Endbefestigungsteil ausgestattet, das einen profilierten Schenkel aufweist, der eine formgetreue Nachbildung der Zahnprofilierung aufweist. Dadurch kommt es zu einer besseren Abtragung der Zugbelastung über die Zahnflanken.

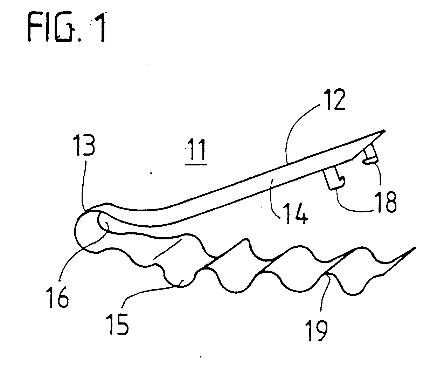

Anhand der Zeichnung wird nachstehend ein Ausführungsbeispiel der Erfindung näher erläutert. Die Figur zeigt ein aus einem Blechstreifen geformtes Endbefestigungsteil, das klammerförmig auf das Zahnriemenende umfassend aufgebracht werden kann.

Das gezeigte Endbefestigungsteil 11 besteht aus einem geformten Elechstreifen 12, der um 180° auf seiner halben Länge umgebogen ist. Dabei stellt der entstandene Bogen 13 zwischen den beiden sich bildenden Schenkeln 14 und 15 eine Ausbuchtung 16 dar, die als Befestigungsöse dient. Der in der Zeichnung untere Schenkel 15 ist wellenförmig ausgebildet, wobei die Form und die Teilung dieser Ausbildung der Teilung und der Fcrm der Zähne des zu befestigenden, hier nicht gezeigten Zahnriemenendes entspricht. Der obere Schenkel 14 ist elastisch gegen den unteren bewegbar und wird bei der Montage am Zahnriemenende auf den Rücken des Zahnriemens gelegt. Dabei schnappen quer zur Längsrichtunc des Zahnriemens elastisch bewegbare Spannhaken 18 in einem Wellental 19 des unteren Schenkels 15 ein und sichern so das klammerartige Endbefestigungsteil 11 an dem hier nicht dargestellten Zahnriemenende.

## Patentansprüche

1. Endlicher Zahnriemen mit mindestens einem Endbefestigungsteil zur Verbindung eines Zahnriemenendes mit einem Gehäuseteil oder einem anzutreibenden Bauteil, bei dem das Endbefestigungsteil (11, 21) aus einem geformten Streifen (12) aus Metall oder Kunststoff besteht, der in die Verzahnung des Zahnriemens eingreifende Elemente oder Abschnitte aufweist, die in der Verzahnung sicherbar sind, und an seinem im montierten Zustand dem Zahnriemenende abgewandten Ende eine mechanische Anschlußmöglichkeit (16) aufweist, wobei der Streifen (12) um 180° gebogen ist, so daß zwei das Zahnriemenende zwischen sich einschließende Schenkel (14, 15) gebildet sind,
**dadurch gekennzeichnet,**
daß der auf der Verzahnung liegende Schenkel (15) entsprechend dieser über seine Länge hin profiliert ist,
daß der Streifen (12) unter Bildung einer eine Öse darstellenden Ausbuchtung (16) um 180° gebogen ist,
und daß das Befestigungsmittel (18) aus an dem nicht profilierten Schenkel (14) angebrachten Spannhaken (18) besteht, durch den oder die der profilierte Schenkel (15) im Zahngrund sicherbar ist.

2. Endlicher Zahnriemen nach Anspruch 1, dadurch gekennzeichnet,
daß der nichtprofilierte Schenkel (14) längs verlaufende Ränder in der Breite des Zahnriemenendes aufweist, von denen entsprechend der Zahnteilung umbiegbare Spannhaken (18) hervorstehen.

## Claims

1. Endless toothed belt, having at least one end securing member to connect one toothed belt end to a housing part or a component to be driven, wherein the end securing member (11, 21) comprises a shaped strip (12), which is formed from metal or plastics material and has elements or sections which engage in the toothing of the toothed belt and are securable in the toothing, and said end securing member has a mechanical connection facility (16) at its end remote from the toothed belt end in the assembled state, the strip (12) being bent through 180° so that two portions (14, 15) are formed which enclose the toothed belt end therebetween, characterised in that the portion (15) lying on the toothing is profiled over its length so as to correspond with said toothing, in that the strip (12) is bent through 180° so as to form a bulge (16), which constitutes an eyelet, and in that the securing means (18) comprises clamping hooks (18), which are attached to the non-profiled portion (14), by means of which hook or hooks the profiled portion (15) is securable in the tooth base.

2. Endless toothed belt according to claim 1, characterised in that the non-profiled portion (14) has longitudinally extending edges in the width of the toothed belt end, from which edges clamping hooks (18) protrude, which can be bent over to correspond to the tooth pitch.

## Revendications

1. Courroie dentée sans fin comportant au moins une partie de fixation d'extrémité destinée à réunir une extrémité de la courroie dentée à un élément de boîtier ou à un composant devant être entraîné, dans laquelle la partie de fixation d'extrémité (11,21) est constituée par une bande conformée (12) formée d'un métal ou d'une matière plastique et qui comporte des éléments ou des tronçons qui s'engagent dans la denture de la courroie dentée et peuvent être bloqués dans la denture, et comporte, au niveau de son extrémité tournée à l'opposé de l'extrémité de la courroie dentée à l'état monté, un système (16) permettant un raccordement mécanique, la bande (12) étant repliée à 180° en forant deux branches (14,15) qui enserrent entre elles l'extrémité de la courroie dentée, caractérisée en ce que la branche (15) située sur la denture est profilée sur toute sa longueur avec un profil correspondant à cette denture,
que la bande (12) est repliée à 180° en formant une configuration coudée (16) représentant un oeillet, et
que le moyen de fixation (18) est constitué par un ou plusieurs crochets de serrage (18), qui sont disposés sur la branche non profilée (14) et au moyen du ou desquels la branche profilée (15) peut être bloquée dans le fond de la denture.

2. Courroie dentée sans fin selon la revendication 1, caractérisée en ce
que la branche non profilée (14) possède, dans le sens de la largeur de l'extrémité de la courroie dentée, des bords longitudinaux, à partir desquels font saillie des crochets de serrage (18) pouvant être repliés conformément au pas de la denture.
